# EUROPÄISCHE PATENTSCHRIFT

(11) **EP 0 863 351 B1**
(45) Veröffentlichungstag und Bekanntmachung des Hinweises auf die Patenterteilung: **11.04.2001**
(21) Anmeldenummer: 98102928.3
(22) Anmeldetag: 19.02.1998
(51) Int. Cl.: F16L 11/11, F16L 11/15, F16L 9/06

(54) **Wellrohr**
Corrugated pipe
Conduit annelé

(30) Priorität: 25.02.1997 DE 19707518
(43) Veröffentlichungstag der Anmeldung: 09.09.1998
(73) Patentinhaber: EMS-INVENTA AG, 8002 Zürich (CH)
(72) Erfinder: Jeltsch, Thomas, Dipl.-Ing., 7013 Domat/Ems (CH); Brueggemann, Jürgen, Dipl.-Ing., 7000 Chur (CH)
(74) Vertreter: Becker Kurig Straus

(56) Entgegenhaltungen:
- DE-C- 4 321 575
- DE-U- 8 910 107
- GB-A- 1 220 975
- US-A- 3 715 454

## Beschreibung

Die Erfindung betrifft ein Wellrohr aus thermoplastischem Polymermaterial für den Einsatz als druckbeaufschlagte Fluidleitung, mit mindestens einer Polymerschicht, aufweisend voneinander in Rohrachsenrichtung beabstandete, geschlossene, geometrische Außenkonturen, die in mindestens einem radialen Winkelbereich in axialer Längsrichtung eine Wellung auf dem Rohrmantel definieren. Die Außenkonturen springen zumindest teilweise radial vor.

Ein derartiges Wellrohr ist bereits bekannt aus der DE 44 32 584 C1, die auf dieselbe Anmelderin zurückgeht und bei der die Außenkonturen als abgeflachte oder segmentweise vergrößerte Kreise ausgebildet sind. Bei dieser Ausführung erstrecken sich die Wellungen über alle radialen Winkelbereiche in Rohrlängsrichtung. Daraus ergeben sich die nachstehend erläuterten Nachteile.

Weitere Ausführungsformen von Wellrohren ergeben sich aus der EP 0 671 582 A1, der DE 43 21 575 C1 sowie der GB 1 209 569. Diese bekannten Ausführungsformen von Wellenrohren enthalten allesamt Außenkonturen, die für eine Wellenlinie in allen radialen Winkelbereichen auf der Rohrmantelfläche sorgen.

Aus der GB-1220975 ist ein Wellrohr bekannt, das Wellungen aufweist, die in einander gegenüberliegenden Bereichen wellungsfrei ausgebildet sind, wobei nur kreisförmige Konturen mit unstetigen Sprüngen im übergangsbereich offenbart sind.

Besonders bevorzugte Anwendungen von Wellrohren liegen im Automobilbereich zur Realisierung von Flüssigkeitsleitungen und Luftführungsteilen.

Herkömmlich werden Luftführungsteile und Flüssigkeitsleitungen, z.B. Kühlflüssigkeitsleitungen, vorzugsweise aus textilarmierten Gummirohren und Gummischläuchen gefertigt. Rohre und Schläuche aus thermoplastischen Kunststoffen bieten eine erhebliche Kosten- und Gewichtseinsparung und besitzen darüber hinaus ein verbessertes Recyclingpotential. Bei dieser Materialsubstitution wird von den thermoplastischen Rohren eine vergleichbare Biegeflexibilität wie bei Gummirohren verlangt.

Die höhere Materialsteifigkeit der relevanten Thermoplaste kann durch eine gewellte Struktur der Rohrmantelfläche kompensiert werden. Diese als Wellrohr bekannte Geometrie ist in verschiedenen Ausführungsformen bekannt. Die damit erreichte Biegeflexibilität verschlechtert aber die Zugsteifigkeit, d.h. bei einer Zugbelastung muß eine größere Längendehnung des Rohres hingenommen werden. Durch die obengenannten Druckschriften sind Wellrohrgeometrien bekannt, die zu einer Erhöhung der Zugsteifigkeit der Wellrohre führen.

All diese Ausführungen sind aber mit dem nachfolgend im Detail erläuterten Problem der Koppelung von Zug- und Biegesteifigkeit behaftet.

Besonders bei Luftführungsteilen und Kühlflüssigkeitsleitungen im Automobilbereich wird neben einer hohen Innendruckfestigkeit eine hohe Biegeflexibilität verlangt, um bei einer Verbindung zwischen beweglichen Bauteilen einen Toleranzausgleich schaffen zu können und um die Montage zu erleichtern.

Bei Wahl eines Wellrohres wird durch die in Rohrlängsrichtung gewellte Oberfläche eine Zug-/Druckflexibilität des Rohres erreicht, die weit über der eines Rohres mit glatter Oberfläche liegt.

Eine in Rohrlängsrichtung geradlinig auftretende Zug- oder Druckdeformation wird in der Wellrohrwandung durch gleichmässig verteilte Biegedeformationen in den einzelnen Profilwellen aufgenommen.

Bei einer Biegedeformation (Krümmung) eines gesamten Wellrohres wird die mittlere Hüllfläche der Rohrwandung, die man sich schlauchförmig vorstellen kann, entsprechend ihrem Abstand von und ihrer Lage zu der gekrümmten Neutralebene (Ebene ohne Zug- oder Druckspannung), in der die gekrümmte Rohrachse verläuft, auf der Seite mit dem grösseren Krümmungsradius (Aussenseite) gedehnt bzw. auf der Seite mit dem kleineren Krümmungsradius (Innenseite) gestaucht.

Die Dehnung bzw. Stauchung wird analog den Deformationen bei einer Zug-/ Druckbelastung durch Biegedeformation (Auseinanderziehen bzw. Zusammendrücken) der Wellen ermöglicht. Als Biegeebene wird dabei die Ebene bezeichnet, in der die Biegung erfolgt. Diese steht also senkrecht auf der Neutralebene und wird selber nicht gebogen.

Da somit für eine Biegedeformation und eine Zug- oder Druckdeformation eines Wellrohres die gleichen Deformationsmechanismen in dem Wellenprofil gelten, sind für herkömmliche Wellrohre Zug-/Drucksteifigkeit und Biegesteifigkeit mechanisch gekoppelt. Das bedeutet, dass ein konventionelles, biegeweiches Wellrohr automatisch auch zug- und druckweich ist.

Die Belastung eines Rohres, ob glatt oder gewellt, durch Innendruck wirkt über die Druckkraft auf die Kontur des inneren Rohrquerschnitts wie eine von aussen aufgebrachte Zugkraft. Für herkömmliche, biegeweiche Wellrohre mit geringer Zugsteifigkeit bedeutet das, dass durch die mechanische Kopplung der Steifigkeiten die Innendruckbelastung zu einer starken Längenänderung des Rohres führt.

Insbesondere ergeben sich daraus Probleme für den Einsatz von Wellrohrleitungen mit schwankender Druckbeaufschlagung, wie sie typischerweise bei Luftführungsteilen und Kühlflüssigkeitsleitungen im Automobilbereich, aber auch bei Wasserleitungen von Waschmaschinen auftreten. Die durch die Druckschwankungen auftretenden Längenänderungen kollidieren oft mit Restriktionen des möglichen Einbauraumes. Die auftretende Biegewechselspannung in den Profilwellen stellt eine zusätzliche Materialbelastung dar und reduziert damit die erreichbare Lebensdauer.

In der DE 43 21 575 C1 wird ein für den Einsatz als Fluidleitung vorgesehenes Wellrohr beschrieben, bei dem in gewissen Längsabschnitten, die nach dem späteren Einbau in ein Kraftfahrzeug nicht vertikal verlaufen, die Wellungen derart exzentrisch ausgebildet sind, dass der später unten liegende Bereich der Rohrwandung innen frei von Wellungen ist. Damit wird die zugrundeliegende Aufgabenstellung gelöst, ein Wellrohr zur Verfügung zu stellen, bei dem sich in den Wellentälern keine Flüssigkeiten oder kein Kondenswasser ansammeln können. Die wellenfreien Bereiche sind aber nur einseitig und nicht durchgehend ausgeführt, und solche Leitungen sind wegen der geringen Zugsteifigkeit nicht zur Druckbeaufschlagung, sondern nur als drucklose Belüftungsrohre geeignet.

Die US 4 592 231 beschreibt ein Wellrohr, das als Schutzrohr für eine leitfähige Folie in einer elektrischen Füllstands-Messvorrichtung für Flüssigkeitsbehälter (zum Beispiel Benzintanks) dient. Hier lautete die Aufgabenstellung, für unzugängliche, gekrümmte Behältergeometrien einen Messfühler mit maximalem Biegungsvermögen in allen Richtungen zu entwickeln, um auch bei unregelmässigen Tankformen der Behälterkonstruktion bis zum tiefsten Punkt folgen zu können. Dies wurde erreicht durch eine leitfähige Folie, die beidseitig über die ganze Länge Einschnitte aufweist und sich dadurch, ohne zu zerknittern oder zu zerreissen, um ihre Längsachse verdrehen und in alle Richtungen biegen lässt. Damit das Schutzrohr, welches ja auch flexibel sein musste, gleichzeitig als Halterung für die Folie dienen konnte, wurde es als Wellrohr ausgeführt, bei dem die Wellungen jeweils gegenüberliegend unterbrochen sind, und diese Unterbrechungen auf zwei helikalen Linien liegen. So konnte die Folie einfach in das Wellrohr eingeschoben werden und wurde dort in der gewünschten, helikal verdrehten Form gehalten. Die ungewellten Bereiche haben jedoch im Vergleich zur vorliegenden Erfindung eine ganz andere Funktion und stehen in keinerlei Zusammenhang mit einer gewollten Verstärkung des Wellrohrs, weil bei dieser Messvorrichtung gerade das Gegenteil, nämlich maximale Flexibilität, gefordert war. Zudem ist die Schutzrohrausführung nicht für druckbeaufschlagte Leitungen geeignet, weil das Schutzrohr gemäss US 4 592 231 weder durchflossen wird noch unter einer Druckdifferenz zwischen Rohrinnenraum und der Umgebung steht. Die Verwendung dieser Geometrie für durchströmte und unter Innendruck stehende Leitungen mit dem eingangs geschilderten Problem ist durch die US 4 592 231 nicht nahegelegt, weil darin weder auf die Längsstabilität des Rohrs noch auf den Zusammenhang zwischen Biege- und Zugsteifigkeit eingegangen wird.

In der DE-AS 1 171 563, die den Bereich der Medizin betrifft, ist ein Faltenschlauch aus Gummi für Narkose- und Beatmungsgeräte beschrieben, bei dem die Längsdehnung bei erhöhtem Gas-Innendruck mittels einer Faltenschlauch-Konstruktion vermieden wird, die in der Mitte eine, sich in Längsrichtung erstreckende, ebene Trennwand aufweist. Somit handelt es sich um einen zweilumigen Schlauch, der rundherum gewellt ist. Weil allein die ebene Trennwand die Längsdehnungskräfte aufnimmt, hat diese Lösung den Nachteil, daß sie an die zusätzliche Trennwand gebunden ist und somit nur dort in Frage kommt, wo ein zweilumiger Schlauch benötigt wird, was in vielen technischen Gebieten selten der Fall ist.

Der Erfindung liegt die Aufgabe zugrunde, ein druckbeaufschlagbares, einlumiges Wellrohr mit hoher Biegeflexibilität und hoher Berstdruckfestigkeit zu schaffen, welches keine zusätzlichen Verstärkungsmittel erfordert und bei Druckbeaufschlagung eine geringe Längsdehnung aufweist.

Die Aufgabe wird durch die im Anspruch 1 angegebenen Merkmale gelöst. Vorteilhafte Ausführungsformen ergeben sich aus den Unteransprüchen.

Die Außenkonturen des Wellrohres sind so ausgebildet, dass in zwei einander ungefähr gegenüberliegenden Bereichen auf der Rohrmantelfläche auf eine Wellung des Rohres vollkommen verzichtet wird. Selbstverständlich ist die Innenkontur des Wellrohrs nach Abzug der Wanddicke ein Abbild der Außenkontur. Die Bereiche ohne Wellung sind in Rohrlängsrichtung fortlaufend und können im Prinzip die Form einer beliebigen Kurve haben. Bevorzugt sind sie ununterbrochen gerade, schraubenförmig oder abschnittweise gerade in wechselnden Winkelpositionen angeordnet. Besonders bevorzugt sind die wellenfreien Mantelbereiche gerade, d.h. achsenparallel, weil dies im Vergleich zur schraubenförmigen Geometrie, die sich unter einer Zugspannung zurückdreht, zu einer noch höheren Zugsteifigkeit, d.h. noch besseren Längsstabilität, führt.

Bevorzugt liegen sich die wellungsfreien Bereiche in einem Winkel von 150-210° gegenüber; besonders bevorzugt beträgt dieser Winkel 180°.

Das Wellrohr verhält sich in den Bereichen ohne Wellung wie ein glattes Rohr. Es kann unter Zug-/Druckbelastung nicht durch Biegedeformation, wie in den gewellten Bereichen, nachgeben.

Im Gegensatz zu konventionellen Wellrohrprofilen ist bei dieser neuen Geometrie die Biegeflexibilität des Wellrohres eine Funktion des radialen Umfangwinkels. In einer Biegeebene, die die Bereiche ohne Wellung schneidet, besitzt das Wellrohr seine maximale Biegesteifigkeit, d.h. minimale Biegeflexibilität. In einer Biegeebene senkrecht zu der Ebene maximaler Biegesteifigkeit ist die Biegesteifigkeit bevorzugt minimal, d.h. die Biegeflexibilität maximal.

Wird das Wellrohr in der Ebene minimaler Biegesteifigkeit gebogen, so befinden sich die Bereiche ohne Wellung in der sogenannten neutralen Biegefaser. Das heisst, es finden in diesen Bereichen nahezu keine Streckungen bzw. Stauchungen statt, während gleichzeitig, im Umfangwinkel um 90° gedreht betrachtet, die Wellungen der Biegung maximal nachgeben (durch Dehnung bzw. Stauchung).

Mit der erfindungsgemäss definierten Geometrie der Außenkonturen ist eine Entkopplung der Biege- und Zugsteifigkeit erreicht. Insbesondere kann mit dieser Geometrie ein Wellrohr hergestellt werden, das eine sehr hohe Längssteifigkeit, d.h. eine geringe Längenänderung des Rohres bei Zug- oder Druckbelastung, besitzt und gleichwohl in einer Biegeebene eine sehr gute Biegeflexibilität aufweist.

Wellrohre mit Längsbereichen ohne Wellungen sind zwar nicht völlig unbekannt, doch betrafen diesbezügliche Wellrohre komplett andere Aufgabenstellungen und unterschiedliche technische Anwendungen, vgl. die GB-1 220 975.

Die vorliegende Erfindung erlaubt zahlreiche Ausführungsformen. Zur Veranschaulichung zeigt:
- **Fig. 1**: einen Querschnitt a, eine Ansicht von oben c, von der Seite b und eine Perspektive d eines erfindungsgemässen Wellrohres mit zwei gegenüberliegenden Bereichen (Mantellinien) ohne Wellung,
- **Fig. 2**: eine Anordnung von Wellrohrabschnitten mit winkelmässig versetzten, ungewellten Mantellinien zur Ermöglichung der Biegedeformation in verschiedenen Ebenen (Querschnitt a, Ansicht von oben c, von der Seite b und eine Perspektive d),

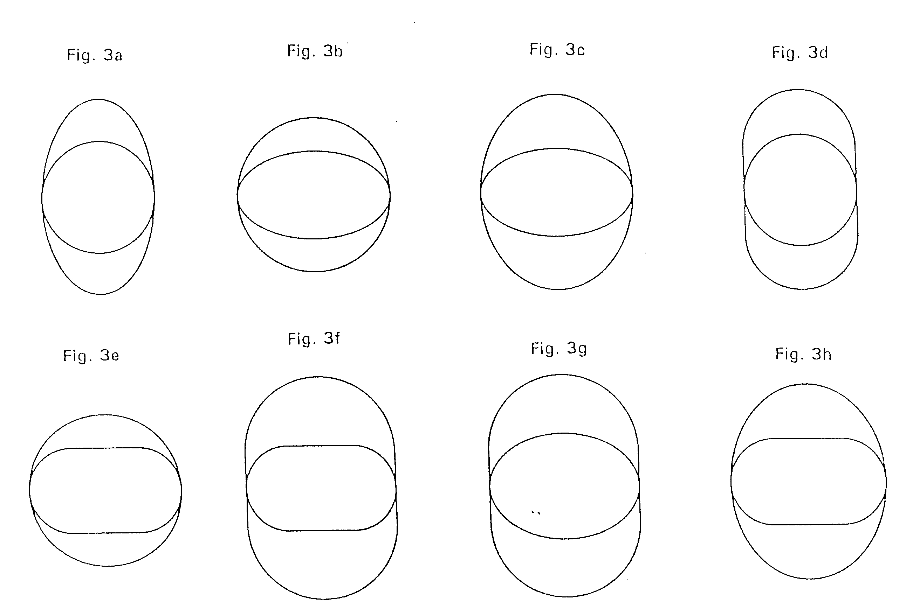

- **Fig. 3**: eine Auswahl möglicher Kombinationen von Innenrohr- und Konturquerschnitten, die ein erfindungsgemässes Wellrohr ergeben,
- **Fig. 4**: Ansichten eines herkömmlichen Wellrohrs, wiederum im Querschnitt a, von oben c, von der Seite b und perspektivisch d.

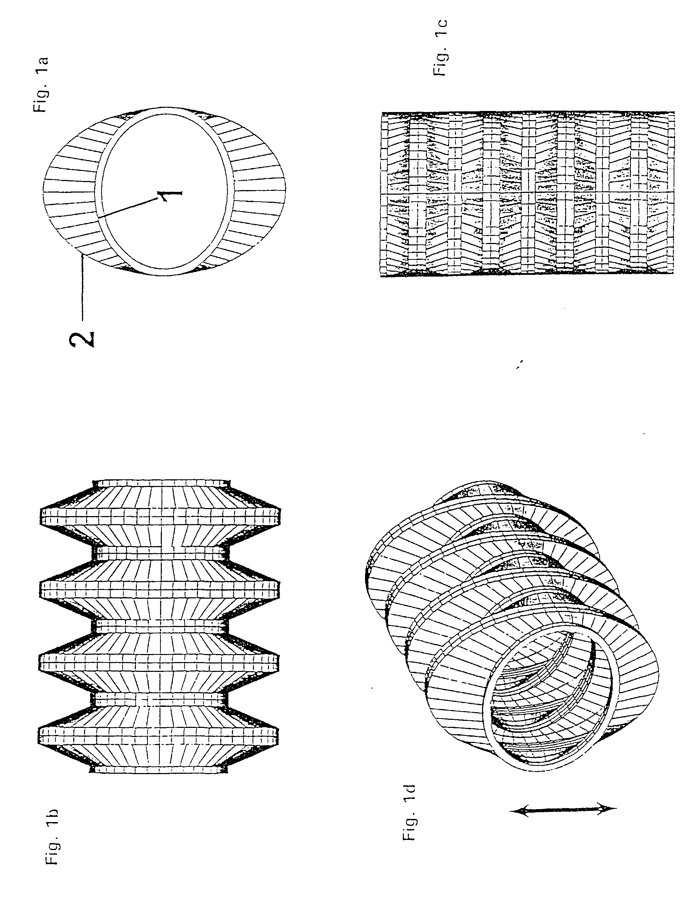

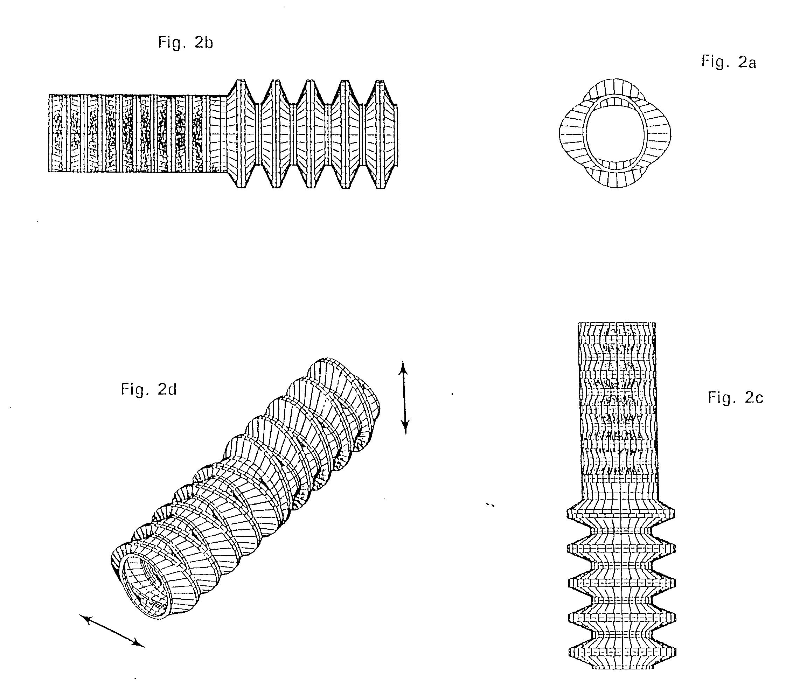

In Fig. 1 und 2 sind durch Doppelpfeile bei der perspektivischen Darstellung die Ebenen mit der höchsten Biegeflexibilität angegeben.

Erfindungsgemäße Geometrien für die durch die Wellung gebildeten Ringe sind Ellipsen, Ovale, die alle auch Abflachungen aufweisen können, sowie sogenannte Langlöcher.

Besonders bevorzugt sind die durch die Konturen gebildeten Ringe konzentrisch um die Rohrachse angeordnet, d.h. so, dass die Schnittpunkte ihrer Achsen bzw. ihr Mittelpunkt auf der Rohrachse liegen.

Eine besonders vorteilhafte Ausgestaltung des erfindungsgemässen Wellrohrprofils ergibt sich, wenn die Außenkonturen des kleinen und des großen Querschnitts (1 bzw. 2 in Fig. 1a) in einer elliptischen Form ausgeführt sind. Dabei ist die grosse Halbachse des kleinen Querschnittes parallel zu und von der gleichen Größe wie die kleine Halbachse des grossen Konturquerschnittes. Die Eigenschaft, dass nicht kreisförmige Querschnitte unter Innendruck zu kreisförmigen Querschnitten zu deformieren neigen, kann durch eine alternierende 90°-Verdrehung von benachbarten elliptischen Querschnitten zur gegenseitigen Kompendieses Bestrebens ausgenützt werden.

Der allgemeine Anwendungsfall einer Wellrohrgeometrie verlangt oftmals eine hohe Biegeflexibilität in mehr als einer Biegeebene. Diese Eigenschaft wird dadurch erreicht, indem mindestens zwei Abschnitte der erfindungsgemässen Wellrohrgeometrie, mit angepasster, unterschiedlicher Ausrichtung der Ebenen minimaler Biegesteifigkeit, hintereinander geschaltet werden (vgl. Figur 2). Durch Hintereinanderschaltung zweier Biegeelemente in einem definierten Winkel, z.B. um 90°, die jeweils eine Biegung nur in einer Ebene zulassen, ist eine beliebige Beweglichkeit eines der beiden Enden innerhalb eines bestimmten Raumwinkels möglich. Auf diese Weise lässt sich für das erfindungsgemässe Wellrohr als ganzes betrachtet eine praktisch uneingeschränkte Beweglichkeit erreichen, obwohl man in jedem einzelnen Abschnitt einen Freiheitsgrad zugunsten der erhöhten Zugsteifigkeit opfern muß. Je nach den von den Einbauverhältnissen abhängigen, verlangten Biegeebenen sind auch andere Versetzungswinkel als 90° vorteilhaft, die maßgeschneidert abschnittsweise angepaßt werden können. Bevorzugt liegt der Versetzungswinkel im Bereich von 20-160°. Bei der Ausgestaltung des Übergangs von einem Abschnitt zum nächsten ist zu beachten, dass auch hier eine ununterbrochene, wellungsfreie Verbindung in Form eines Rings, d.h. eines kurzen geraden Rohrstücks, geschaffen wird, in welchem die wellungsfreien Mantellinien des einen Abschnitts enden und sich die nächsten, winkelmässig verdreht, fortsetzen, damit die Abschnitte ohne die Schwachstelle einer Wellung oder Einschnürung fortlaufend zusammengesetzt sind.

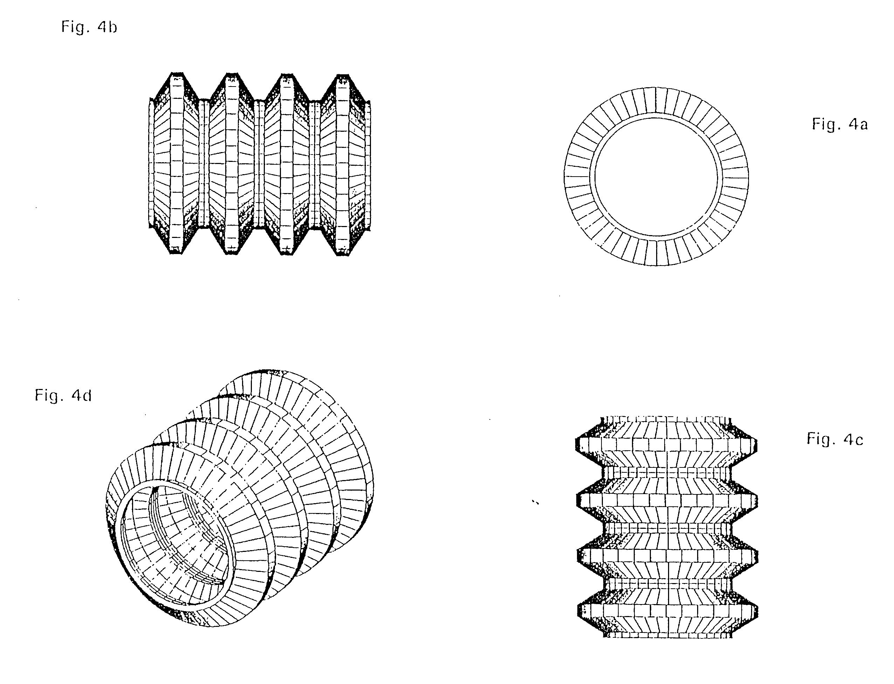

Um die Wirkung der neuen Wellrohrgeometrie quantifizieren zu können, wurde mittels Finite-Elemente-Analyse das erfindungsgemässe Wellrohrprofil, welches in Figur 1 gezeigt ist, mit einem konventionellen, symmetrischen, kreisrunden Wellrohrprofil gemäss **Figur 4** verglichen. Die Geometrie der beiden Vergleichsprofile wurde so gewählt, dass die freien Durchflussquerschnitte und die mittleren Wanddicken einander entsprechen. Für die Berechnung wurde ein Polymermaterial mit 100MPa isotroper Materialsteifigkeit angenommen. An beiden Profilen wurden zwei Lastfälle simuliert, die typische Betriebsbedingungen für Luftführungsteile und Kühlflüssigkeitsleitungen im Automobilbereich darstellen.

Im Lastfall A wurde 2bar Innendruck (Differenzdruck) aufgebracht und im Lastfall B zusätzlich zu dem Innendruck eine Biegedeformation von 5° pro 20mm Profillänge. Die nachfolgende **Tabelle 1** zeigt insbesondere den Unterschied in der resultierenden Längsdehnung, hervorgerufen durch den Innendruck, und die unter Lastfall B maximal auftretenden, sogenannten Vergleichsspannungen.

**Tabelle 1**

| Eigenschaft | [Einheit] | konventionelles Wellrohr (Figur 4) | erfindungsgemässes Wellrohr (Figur 1) |
|---|---|---|---|
| Durchflussquerschnitt | [mm²] | 1050 | 1050 |
| mittlere Wanddicke | [mm] | 1,5 | 1,5 |
| Biegesteifigkeit | [Nmm²/rad] | 5,0·10⁵ | 4,3·10⁵ *) |
| Längsdehnung unter 2bar Innendruck | [%] | 11,0 | 2,5 |
| Maximale Vergleichsspannung unter 2bar Innendurck und 5° Biegedeformation pro 20mm Profillänge | [MPa] | 13 | 10 |

| | | | |
|---|---|---|---|
| *) in der Ebene der höchsten Biegeflexibilität | | | |

Bei allen drei Kriterien zeigt das erfindungsgemässe Wellrohr klare Vorteile, d.h. höhere Flexibilität und trotzdem deutlich, d.h. sogar um Faktoren kleinere Längsdehnung und kleinere maximale Vergleichsspannung. Diese Vorteile liegen auch vor gegenüber den mit Rippen verstärkten oder anderweitig modifizierten Wellrohren aus dem Stand der Technik, die zwischen dem konventionellen und dem erfindungsgemässen Wellrohr von Tabelle 1 einzuordnen sind.

Die erfindungsgemässen Polymer-Wellrohre können aus einer, zwei oder mehreren Materialschichten aufgebaut sein. Ein bevorzugtes Herstellverfahren ist die Extrusion oder Coextrusion mit anschliessendem Saug- oder Blasformen zur Ausbildung der erfindungsgemässen Geometrie. Andere bevorzugte Verfahren sind Extrusionsblasformen, Coextrusionsblasformen und sequentielles Blasformen, jeweils mit oder ohne Schlauchmanipulation.

Grundsätzlich können beliebige thermoplastische Polymere zur Herstellung des erfindungsgemässen Wellrohrs eingesetzt werden. Bevorzugte Polymere oder Polymerkombinationen sind beschrieben in EP 0 671 582 A1 und DE 44 32 584 C1, die beide auf dieselbe Anmelderin zurückgehen.

## Patentansprüche

1. Wellrohr aus thermoplastischem Polymermaterial für den Einsatz als druckbeaufschlagte Fluidleitung, mit mindestens einer Polymerschicht, aufweisend voneinander in Rohrachsenrichtung beabstandete, geschlossene, geometrische Außenkonturen, die in mindestens einem radialen Winkelbereich in axialer Längsrichtung hintereinander eine Wellung auf dem Rohrmantel definieren, wobei die geschlossenen, geometrischen Außenkonturen so ausgebildet sind, daß zwei einander ungefähr gegenüberliegende Bereiche der Rohrmantelfläche frei von Wellungen sind und diese Bereiche sich in Längsrichtung erstrecken, wobei die die Wellungen bildenden Außenkonturen im radialen Schnitt die Form von Ellipsen, Ovalen oder Langlöchern aufweisen.

2. Wellrohr gemäß Anspruch 1, dadurch gekennzeichnet, daß sich die wellungsfreien Mantellinien in einem Winkel von 150-210° und besonders bevorzugt in einem Winkel von 180° gegenüberliegen.

3. Wellrohr gemäß Anspruch 1 oder 2, dadurch gekennzeichnet, daß die beiden wellungsfreien Bereiche ununterbrochen geradlinig sind und parallel zur Rohrachse verlaufen.

4. Wellrohr gemäß Anspruch 1 oder 2, dadurch gekennzeichnet, daß die beiden wellungsfreien Bereiche in mindestens zwei axial aufeinanderfolgenden Abschnitten des Wellrohres in unterschiedlichen radialen Winkelbereichen angeordnet sind.

5. Wellrohr gemäß Anspruch 1 oder 2, dadurch gekennzeichnet, daß die beiden wellungsfreien Bereiche schraubenförmig um die Rohrachse herum verlaufen.

6. Wellrohr nach einem der vorhergehenden Ansprüche, dadurch gekennzeichnet, daß die die Wellungen bildenden Außenkonturen in einzelnen Bereichen abgeflacht sind.

7. Wellrohr nach Anspruch 6, dadurch gekennzeichnet, daß die die Wellungen bildenden Außenkonturen konzentrisch zur Rohrachse angeordnet sind

8. Wellrohr nach Anspruch 6 oder 7, dadurch gekennzeichnet, daß bei Ausbildung der Außenkonturen als Ellipsen die große Halbachse des kleinen Querschnitts parallel zu und von gleicher Größe ist, wie die kleine Halbachse des großen Konturenquerschnitts.

9. Wellrohr nach Anspruch 4, dadurch gekennzeichnet, daß die aufeinander folgenden wellungsfreien Bereichspaare um 20-160° gegeneinander gedreht sind.

10. Wellrohr nach einem der vorhergehenden Ansprüche, herstellbar durch Extrusion oder Coextrusion mit anschließendem Saug- oder Blasformen, sowie durch Extrusionsblasformen, Coextrusionsblasformen oder sequentielles Blasformen mit oder ohne Schlauchmanipulation.

11. Verwendung von Wellrohren gemäß einem der vorhergehenden Ansprüche für Luftführungsteile und Flüssigkeitsleitungen in Automobilen oder als Wasserleitungen bei Waschmaschinen.

## Claims

1. Corrugated pipe of thermoplastic polymer material for use as a pressurized fluid conduit, with at least one polymer layer, comprising closed external geometric contours spaced apart in the direction of the pipe's axis which in at least one radial sector consecutive in an axial longitudinal direction define a corrugation on the pipe surface, the continuous external geometric contours being so shaped that two zones of the pipe surface approximately facing each other are free of corrugations and these zones extend in the longitudinal direction, the external contours forming the corrugation exhibiting the shape of ellipses, ovals or oblong holes in radial cross section.

2. Corrugated pipe according to claim 1, characterized in that the surface lines free of corrugation face each other at an angle of 150 to 210° and particularly preferably in an angle of 180°.

3. Corrugated pipe according to claim 1 or 2, characterized in that the two zones free of corrugation are continuously straight-lined and run parallel to the pipe's axis.

4. Corrugated pipe according to claim 1 or 2, characterized in that the two zones free of corrugation in at least two axially consecutive segments of the corrugated pipe are arranged in different radial sectors.

5. Corrugated pipe according to claim 1 or 2, characterized in that the two zones free of corrugation run helically around the pipe's axis.

6. Corrugated pipe according to one of the preceding claims, characterized in that the external contours forming the corrugation are flattened in individual zones.

7. Corrugated pipe according to claim 6, characterized in that the external contours forming the corrugation are arranged concentrically to the pipe's axis.

8. Corrugated pipe according to claim 6 or 7, characterized in that in external contours of elliptical shape, the major semiaxis of the small cross section is parallel to and of the same size as the minor semiaxis of the large contour cross section.

9. Corrugated pipe according to claim 4, characterized in that the consecutive pairs of zones free of corrugation are rotated by 20 to 160° relative to each other.

10. Corrugated pipe according to one of the preceding claims, apt to be produced by extrusion or coextrusion followed by vacuum or blow molding, as well as by blow extrusion, blow coextrusion or sequential blow forming with or without hose manipulation.

11. Use of corrugated pipes according to one of the preceding claims for air duct and fluid conduits in automobiles or as water conduits in washing machines.

## Revendications

1. Tube ondulé en matériau polymère thermoplastique, pour utilisation à titre de conduite de fluide sollicitée par une pression, comportant au moins une couche polymère présentant des contours extérieurs géométriques fermés espacés les uns des autres dans la direction de l'axe du tube, contours qui définissent, en au moins une plage angulaire radiale, les uns derrière les autres en direction longitudinale axiale, une ondulation sur l'enveloppe tubulaire, les contours extérieurs géométriques fermés étant configurés de manière que deux zones, à peu près opposées l'une à l'autre, de la surface d'enveloppe tubulaire, sont exemptes d'ondulations et ces zones s'étendant en direction longitudinale, les contours extérieurs constituant les ondulations, observés en coupe radiale, ont la forme d'ellipses, d'ovales ou de trous oblongs.

2. Tube ondulé selon la revendication 1, caractérisé en ce que les lignes d'enveloppe exemptes d'ondulations sont placées les unes à l'opposé des autres sous des angles de 150 à 210° et, de façon particulièrement préférée, sous un angle de 180°.

3. Tube ondulé selon la revendication 1 ou 2, caractérisé en ce que les deux zones exemptes d'ondulations sont rectilignes de façon ininterrompue et s'étendent parallèlement à l'axe de tube.

4. Tube ondulé selon la revendication 1 ou 2, caractérisé en ce que les deux zones exemptes d'ondulations sont disposées en au moins deux tronçons, successifs axialement, du tube ondulé, en des plages angulaires radiales différentes.

5. Tube ondulé selon la revendication 1 ou 2, caractérisé en ce que les deux zones exemptes d'ondulations s'étendent autour de l'axe du tube en formant une hélice.

6. Tube ondulé selon l'une des revendications précédentes, caractérisé en ce que les contours extérieurs formant les ondulations sont aplatis dans des zones spécifiques.

7. Tube ondulé selon la revendication 6, caractérisé en ce que les contours extérieurs formant les ondulations sont disposés concentriquement à l'axe de tube.

8. Tube ondulé selon la revendication 6 ou 7, caractérisé en ce que, dans le cas d'une configuration des contours extérieurs en ellipses, le grand demi-axe de la petite section transversale est parallèle et de même valeur que le petit demi-axe de la grande section transversale de contour.

9. Tube ondulé selon la revendication 4, caractérisé en ce que les paires de zones exemptes d'ondulations qui se suivent sont tournées les unes par rapport aux autres de 20 à 160°.

10. Tube ondulé selon l'une des revendications précédentes, susceptible d'être fabriqué par extrusion ou co-extrusion avec des moules à aspiration ou à soufflage raccordés, ainsi que par des moules à soufflage et extrusion, des moules à soufflage et co-extrusion ou des moules à soufflage séquentiel, avec ou sans manipulation du tuyau.

11. Utilisation de tubes ondulés selon l'une des revendications précédentes pour des pièces de guidage d'air et des conduites pour liquides, dans des automobiles ou en tant que conduites d'eau pour des machines à laver.
